# EUROPEAN PATENT APPLICATION

(11) **EP 4 290 600 A1**
(43) Date of publication of application: **13.12.2023**
(21) Application number: 22749707.0
(22) Date of filing: 01.02.2022
(51) Int. Cl.: H01M 4/13, H01M 4/36, H01M 4/62, H01M 10/052

(54) **ELECTROCHEMICAL CELL**

(30) Priority: 03.02.2021 JP 2021015996
(71) Applicant: Kyocera Corporation, Kyoto-shi Kyoto 612-8501 (JP)
(72) Inventor: ARANAMI, Junji, Kyoto-shi, Kyoto 612-8501 (JP)
(74) Representative: TBK
(86) International application number: PCT/JP2022/003859
(87) International publication number: WO 2022/168835

(57) **Abstract**

An electrochemical cell includes an electricity generator, a casing, and a terminal. The electricity generator includes a negative electrode, a positive electrode, and a separator between the negative electrode and the positive electrode. The negative electrode includes a negative electrode current collector and a negative electrode active material layer. The negative electrode active material layer includes a first portion including a silicon layer on a surface of the negative electrode current collector and a first carbon material layer on a surface of the silicon layer, and a second portion including a second carbon material layer on the surface of the negative electrode current collector and continuous with the first carbon material layer.

## Description

### TECHNICAL FIELD

The present disclosure relates to an electrochemical cell.

### BACKGROUND OF INVENTION

A known technique is described in, for example, Patent Literature 1.

### CITATION LIST

### PATENT LITERATURE

Patent Literature 1: Japanese Unexamined Patent Application Publication (Translation of PCT Application) No. 2020-509541

### SUMMARY

In an aspect of the present disclosure, an electrochemical cell includes a first electrode including a first current collector and a first electrode active material layer, a second electrode including a second current collector and a second electrode active material layer, a separator between the first electrode and the second electrode, a casing accommodating the first electrode, the second electrode, and the separator, a first terminal electrically connected to the first current collector and extending outside from the casing, and a second terminal electrically connected to the second current collector and extending outside from the casing. The first electrode active material layer includes a first portion including a silicon layer on a surface of the first current collector and a first carbon material layer on a surface of the silicon layer, and a second portion including a second carbon material layer on the surface of the first current collector and continuous with the first carbon material layer.

### BRIEF DESCRIPTION OF THE DRAWINGS

The objects, features, and advantages of the present disclosure will become more apparent from the following detailed description and the drawings.
FIG. 1 is an external view of an electrochemical cell.
FIG. 2 is a cross-sectional view taken along line II-II in FIG. 1.
FIG. 3 is an enlarged cross-sectional view of a negative electrode and an area nearby.
FIG. 4 is a plan view of an example negative electrode active material layer.
FIG. 5 is a plan view of another example negative electrode active material layer.
FIG. 6 is a plan view of another example negative electrode active material layer.

### DESCRIPTION OF EMBODIMENTS

Known secondary batteries reusable by repeated charging and discharging can be power sources for various products including home appliances, information processors, and electric vehicles. Such secondary batteries include lithium-ion batteries that use lithium compounds as the electrolyte. Lithium-ion batteries feature high outputs (high voltages), high energy densities, and compact sizes.

Patent Literature 1 describes a multilayer electrode that includes two or more electrode active material layers on one or both surfaces of a current collector, with a layer closer to the current collector having higher contents of a carbon material and a binder and a layer farther from the current collector having a higher content of a silicon material.

One or more aspects of the present disclosure are directed to an electrochemical cell that can be smaller.

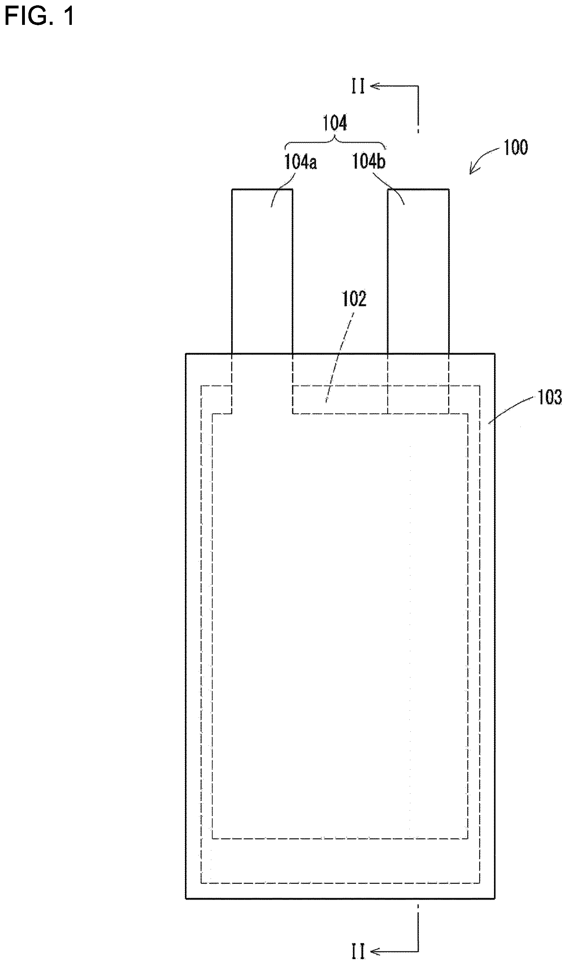

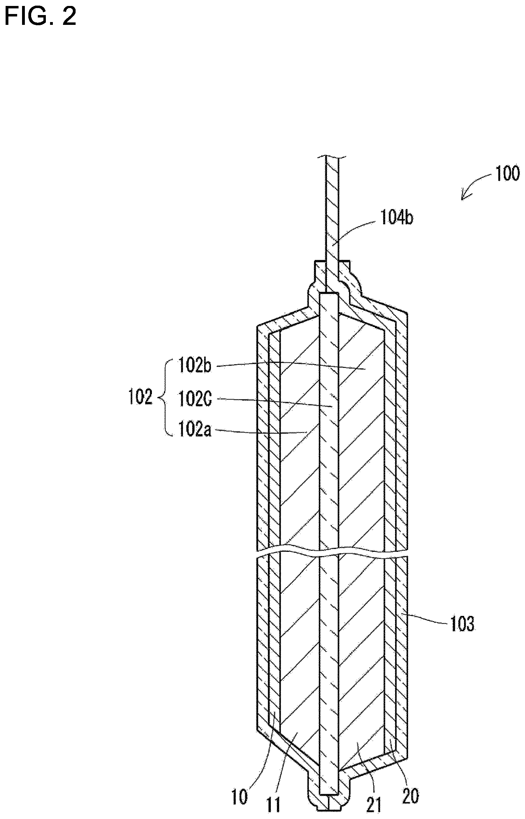

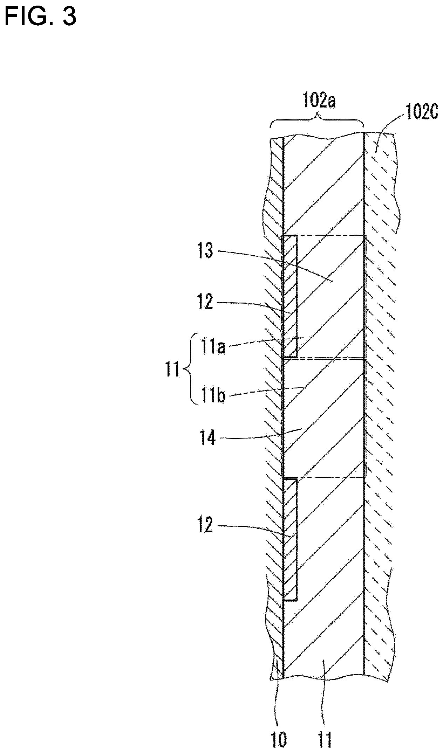

An electrochemical cell according to one or more embodiments of the present disclosure will now be described with reference to the drawings. FIG. 1 is an external view of the electrochemical cell. FIG. 2 is a cross-sectional view taken along line II-II in FIG. 1. FIG. 3 is an enlarged cross-sectional view of a negative electrode and an area nearby. An electrochemical cell 100 is, for example, a semisolid lithium-ion battery. The electrochemical cell 100 includes an electricity generator 102, a casing 103, and a terminal 104. The electrochemical cell 100 is, for example, a plate. The electrochemical cell 100 is electrically connected to an external device to serve as a power supply for the external device.

The electricity generator 102 charges and discharges through an electrochemical reaction. The electricity generator 102 includes, for example, a negative electrode 102a as a first electrode, a positive electrode 102b as a second electrode, and a separator 102c between the negative electrode 102a and the positive electrode 102b. The electricity generator 102 allows cations or anions to travel between the negative electrode 102a and the positive electrode 102b through the separator 102c.

The electricity generator 102 is, for example, a stack of the negative electrode 102a, the separator 102c, and the positive electrode 102b. The electricity generator 102 is, for example, a plate. The electricity generator 102 includes, for example, the negative electrode 102a, the separator 102c, and the positive electrode 102b stacked in the thickness direction of the plate.

The negative electrode 102a and the positive electrode 102b contain, for example, an electrochemically active material. The negative electrode 102a and the positive electrode 102b may contain, for example, an electrolyte. The electrolyte may be, for example, a solvent containing salt or a solvent mixture containing salt.

The negative electrode 102a includes a negative electrode current collector 10 and a negative electrode active material layer 11. The negative electrode current collector 10 as a first current collector is, for example, a plate, a sheet, or foil containing a conductive material. The negative electrode active material layer 11 as a first electrode active material layer is located on one or both surfaces of the negative electrode current collector 10. The negative electrode active material layer 11 may contain a negative electrode active material and an electrolyte.

The negative electrode current collector 10 contains a metal material, such as aluminum, copper, lithium, nickel, stainless steel, tantalum, titanium, tungsten, vanadium, or an alloy of two or more of these metals. The negative electrode current collector 10 may contain a nonmetallic material such as a metal oxide (e.g., TiN, TiB₂, MoSi₂, n-BaTiO₃, Ti₂O₃, ReO₃, RuOz, or IrO₂). The negative electrode current collector 10 has a thickness of, for example, 5 to 15 µm. The outer dimensions of the negative electrode current collector 10 are substantially the same as the outer dimensions of the negative electrode 102a and may be determined as appropriate for the dimensions of the electrochemical cell 100.

The negative electrode active material layer 11 includes a first portion 11a including a silicon layer 12 located on a surface of the negative electrode current collector 10 and a first carbon material layer 13 located on a surface of the silicon layer 12, and a second portion 11b including a second carbon material layer 14 located on the surface of the negative electrode current collector 10 and continuous with the first carbon material layer 13.

The silicon layer 12 in the first portion 11a is located directly on the surface of the negative electrode current collector 10. The silicon layer 12 is a thin film of a silicon material, such as pure silicon (Si), silicon oxide (SiOx (0 ≤ x < 2)), or a silicon alloy. The silicon layer 12 may be a thin film of crystalline silicon or a thin film of amorphous silicon. The silicon layer 12 being an amorphous silicon thin film is more deformable and is less likely to break when the negative electrode current collector 10 deforms.

The first carbon material layer 13 in the first portion 11a is located directly on the surface of the silicon layer 12. The first carbon material layer 13 contains a carbon material and an electrolyte. The first carbon material layer 13 may be formed by, for example, mixing the electrolyte and the carbon material into a paste and applying the paste to the surface of the silicon layer 12.

Examples of the carbon material include graphite, hard carbon, soft carbon, carbon nanotubes, and graphene. Such carbon materials may be, for example, particles, short fibers, or flakes, such as graphite particles or graphite flakes. The electrolyte may be a nonaqueous electrolyte such as lithium salt (for lithium-ion batteries) or sodium salt (for sodium-ion batteries) in a solvent. Examples of lithium salt include LiPF₆, LiBF₄, and LiClO₄. Examples of sodium salt include NaClO₄, NaPF₆, and sodium bis (trifluoromethanesulfonimide) (Na-TFSI). Examples of the solvent include propylene carbonate (PC), ethylene carbonate (EC), dimethyl carbonate (DMC), dimethoxyethane (DME), diethyl carbonate (DEC), tetrahydrofuran (THF), and triethylene glycol dimethyl ether.

The second carbon material layer 14 in the second portion 11b is located directly on the surface of the negative electrode current collector 10. The second carbon material layer 14 contains a carbon material and an electrolyte. The second carbon material layer 14 may be formed by, for example, mixing the electrolyte and the carbon material into a paste and applying the paste to the surface of the negative electrode current collector 10. The same carbon material and the same electrolyte as for the first carbon material layer 13 may be used for the second carbon material layer 14.

The first carbon material layer 13 and the second carbon material layer 14 may contain, in addition to the electrolyte and the carbon material, additives such as silicon, silicon oxide, and polyimide as a binder as appropriate. The first carbon material layer 13 and the second carbon material layer 14 in the negative electrode 102a in the present embodiment are substantially free of a binder material.

An example negative electrode 102a includes the negative electrode current collector 10 being copper foil on which a thin silicon film is formed as the silicon layer 12 by sputtering. The silicon layer 12 is formed on a partial surface of the negative electrode current collector 10, rather than being formed across the entire surface. The surface of the negative electrode current collector 10 may not be entirely covered by the silicon layer 12 and may be partially exposed. A paste as a mixture of an electrolyte and a carbon material is applied to the entire surface of the negative electrode current collector 10 on which the silicon layer 12 is formed. A paste portion applied to the area with the silicon layer 12 serves as the first carbon material layer 13, whereas a paste portion applied to the area without the silicon layer 12 serves as the second carbon material layer 14. The first carbon material layer 13 and the second carbon material layer 14 are formed by applying the same paste and are thus continuous with each other.

The first portion 11a and the second portion 11b may have the same thickness or different thicknesses. The silicon layer 12 in the first portion 11a has a thickness of, for example, 0.5 to 15 µm. The first carbon material layer 13 in the first portion 11a has a thickness of, for example, 0.5 to 349.5 µm. The second carbon material layer 14 in the second portion 11b has a thickness of, for example, 15.5 to 350 µm.

The negative electrode active material layer 11 may include the first portion 11a and the second portion 11b. When the negative electrode 102a is viewed in plan, an area S1 of the first portion 11a and an area S2 of the second portion 11b are written as S1 = S2, S1 > S2, or S1 < S2.

The negative electrode active material layer 11 in the negative electrode 102a includes, in the first portion 11a, the silicon layer 12 directly on the surface of the negative electrode current collector 10 to increase the energy density of the electrochemical cell 100. The negative electrode active material layer 11 includes, in the second portion 11b, the second carbon material layer 14 directly on the surface of the negative electrode current collector 10 and continuous with the first carbon material layer 13. The negative electrode 102a is thus less likely to have an increased electrical resistance. As described above, the negative electrode 102a in the present embodiment can reduce an increase in the electrical resistance, while increasing the energy density with the silicon layer 12 and allowing the electrochemical cell 100 to be smaller.

The positive electrode 102b includes a positive electrode current collector 20 and a positive electrode active material layer 21. The positive electrode current collector 20 as a second current collector is, for example, a plate, a sheet, or foil, and contains a conductive material. The positive electrode active material layer 21 as a second electrode active material layer is located on one or both surfaces of the positive electrode current collector 20. The positive electrode active material layer 21 may contain a positive electrode active material and an electrolyte.

The positive electrode current collector 20 may contain, as a conductive material, the same carbon material as the negative electrode current collector 10 described above. The positive electrode active material may be, for example, lithium nickel cobalt aluminum oxide (NCA), lithium manganese oxide spinel (LMO), lithium iron phosphate (LFP), lithium cobalt oxide (LCO), or lithium nickel cobalt manganese oxide (NCM). The positive electrode 102b may contain, for example, solid-state compounds used for, for example, nickel metal hydride batteries and nickel-cadmium batteries as known to those skilled in the art. The positive electrode 102b may contain, for example, magnesium (Mg)-doped LiCoO₂ and LiNiO₂. The same electrolyte as for the negative electrode active material layer 11 described above may be used. The positive electrode active material layer 21 can be formed by, for example, mixing the electrolyte and the positive electrode active material to form a paste and applying the paste to the surface of the positive electrode current collector 20.

The positive electrode current collector 20 has a thickness of, for example, 5 to 30 µm. The positive electrode active material layer 21 has a thickness of, for example, 100 to 450 µm.

The separator 102c allows cations or anions to travel between the negative electrode 102a and the positive electrode 102b. The first carbon material layer 13 and the second carbon material layer 14 in the negative electrode 102a are in contact with the separator 102c. The positive electrode active material layer 21 in the positive electrode 102b is in contact with the separator 102c. The electricity generator 102 includes the separator 102c to electrically insulate the positive electrode 102b and the negative electrode 102a from each other.

The electricity generator 102 being a plate may have, for example, a length of 50 to 500 mm, a width of 50 to 300 mm, and a thickness of 0.1 to 2.0 mm.

The casing 103 has a space for accommodating the electricity generator 102. The casing 103 protects the electricity generator 102 from the external environment. More specifically, the casing 103 electrically insulates the electricity generator 102 from the external environment. The casing 103 entirely covers the electricity generator 102.

The casing 103 is, for example, a flat bag. The casing 103 is formed from, for example, a laminated film shaped into a flat bag. The casing 103 may be formed by, for example, welding two laminated films together. The casing 103 may be, for example, rectangular as viewed in the stacking direction of the negative electrode 102a, the separator 102c, and the positive electrode 102b.

The casing 103 includes, for example, an insulator. The casing 103 protects the electricity generator 102 from the external environment with no short circuit between the external environment and the electricity generator 102. The casing 103 contains, for example, a resin material. Examples of the resin material include polyethylene terephthalate and polyethylene.

The casing 103 may be, for example, multilayered. More specifically, the casing 103 contains, for example, a thermally adhesive resin material and a heat-resistant resin material. More specifically, the thermally adhesive resin material melts at temperatures lower than 150°C. More specifically, the heat-resistant resin material melts at 150 to 300 °C inclusive. The heat-resistant resin material may be, for example, polyethylene terephthalate or polyethylene naphthalate. The thermally adhesive resin material may be, for example, polyethylene or polypropylene.

The terminal 104 electrically connects the electricity generator 102 to an external device. The terminal 104 is, for example, a plate or a strip. More specifically, the terminal 104 is, for example, rectangular as viewed in the stacking direction of the electricity generator 102. The terminal 104 may be, for example, rectangular. The terminal 104 includes a negative electrode terminal 104a and a positive electrode terminal 104b. The negative electrode terminal 104a is electrically connected to the negative electrode current collector 10 and extends outside from the casing 103. The positive electrode terminal 104b is electrically connected to the positive electrode current collector 20 and extends outside from the casing 103.

The terminal 104 is on one peripheral side of the electricity generator 102 as viewed in the stacking direction of the electricity generator 102. The terminal 104 is electrically connected to an external-connection terminal outside from the casing 103.

The terminal 104 is, for example, electrically conductive. The terminal 104 may contain, for example, a metal material. Examples of the metal material include aluminum and copper. The terminal 104 being a plate may have, for example, a length of 30 to 100 mm, a width of 10 to 100 mm, and a thickness of 0.1 to 0.5 mm.

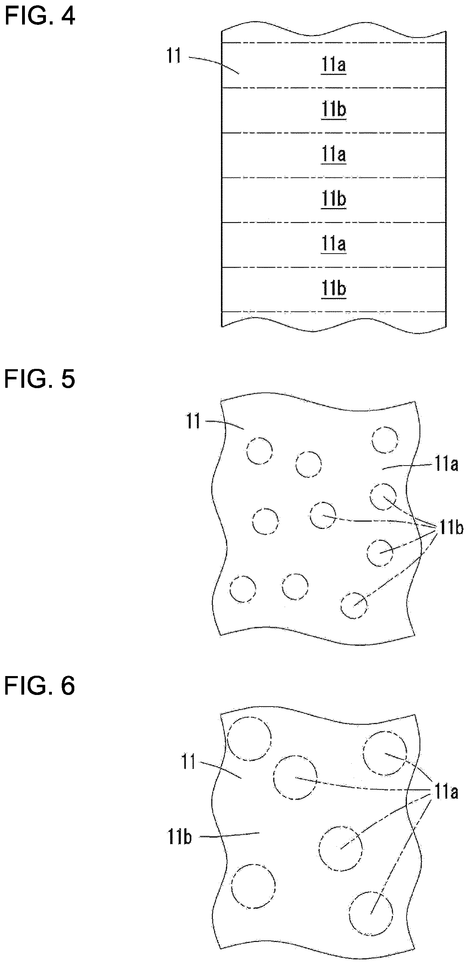

FIG. 4 is a plan view of an example negative electrode active material layer. As illustrated in FIG. 4, the negative electrode active material layer 11 includes, for example, strip-shaped first portions 11a and strip-shaped second portions 11b that alternate with each other as viewed in plan. This structure includes, for example, strip-shaped silicon layers 12 at regular intervals on the surface of a negative electrode current collector 10, thus exposing strip portions of the surface of the negative electrode current collector 10. First carbon material layers 13 are further located on the strip-shaped silicon layers 12. Second carbon material layers 14 are located on the exposed strip portions of the surface of the negative electrode current collector 10. A first carbon material layer 13 and a second carbon material layer 14 adjacent to each other are continuous with each other. The strip-shaped first portions 11a and the strip-shaped second portions 11b may have the same width or different widths. For example, the strip-shaped first portions 11a may have the same width as the strip-shaped second portions 11b and may be as many as the strip-shaped second portions 11b. In this structure, the first portions 11a may have an area S1 that is the same size as an area S2 of the second portions 11b (S1 = S2) when the negative electrode 102a is viewed in plan.

FIG. 5 is a plan view of another example negative electrode active material layer. As illustrated in FIG. 5, the negative electrode active material layer 11 includes second portions 11b surrounded by a first portion 11a as viewed in plan. This structure may include a silicon layer 12 with multiple through-holes in the surface of a negative electrode current collector 10, exposing the surface of the negative electrode current collector 10 through the through-holes. A first carbon material layer 13 is further located on the silicon layer 12. Second carbon material layers 14 are located on the exposed surface of the negative electrode current collector 10. The second portions 11b are surrounded by the first portion 11a. The first carbon material layers 13 and the second carbon material layer 14 are continuous with each other. In this example, the second portions 11b as viewed in plan are, or in other words, the through-holes are circular, but may have another shape. The second portions 11b as viewed in plan may be polygonal such as triangular or quadrangular, elliptical, in the form of long holes, or irregularly shaped. In this structure, the first portion 11a may have an area S 1 larger than an area S2 of the second portions 11b (S1 > S2) when the negative electrode 102a is viewed in plan.

FIG. 6 is a plan view of another example negative electrode active material layer. As illustrated in FIG. 6, the negative electrode active material layer 11 includes first portions 11a surrounded by a second portion 11b as viewed in plan. In this structure, for example, multiple silicon layers 12 are located as islands on the surface of a negative electrode current collector 10, exposing the other areas of the surface of the negative electrode current collector 10. First carbon material layers 13 are further located on the multiple silicon layers 12. A second carbon material layer 14 is located on the exposed areas of the surface of the negative electrode current collector 10. The first portions 11a are surrounded by the second portion 11b. The first carbon material layers 13 and the second carbon material layer 14 are continuous with each other. In this structure, the first portions 11a as viewed in plan, or the silicon layers 12, are circular, but may have another shape. The first portions 11a as viewed in plan may be polygonal such as triangular or quadrangular, elliptical, in the form of long holes, or irregularly shaped. In this structure, the first portions 11a may have an area S 1 smaller than an area S2 of the second portion 11b (S 1 < S2) when the negative electrode 102a is viewed in plan.

### Examples

An electrochemical cell in an example includes a negative electrode including a negative electrode current collector being copper foil, strip-shaped amorphous silicon layers on the surface of the negative electrode current collector as illustrated in FIG. 4, and negative electrode active material layers on the surfaces of the negative electrode current collector and the amorphous silicon layers. The negative electrode active material layers contain a negative electrode active material being a mixture of graphite powder and 1 wt% of conductive carbon powder, and an electrolyte. A known electrochemical cell in comparative example 1 includes a negative electrode including a negative electrode current collector and a negative electrode active material layer containing a negative electrode active material and an electrolyte. An electrochemical cell in comparative example 2 includes a negative electrode including a negative electrode current collector being copper foil, an amorphous silicon layer covering the entire surface of the negative electrode current collector, and a negative electrode active material layer on the surface of the amorphous silicon layer. The negative electrode active material layer contains a negative electrode active material being a mixture of graphite powder and 1 wt% of conductive carbon powder, and an electrolyte. Each of these electrochemical cells includes a positive electrode including graphite-coated aluminum foil as a positive electrode current collector, and lithium iron phosphate, carbon black, and an electrolyte solution that are kneaded together.

The energy density and the electrical resistance of the electrochemical cells in the example and comparative examples 1 and 2 were measured.

### Energy Density Measurement

The weight of the positive electrode active material and the weights of the negative electrode active material, copper foil or copper foil with amorphous silicon, aluminum foil, and a separator each having the same area as the positive electrode active material were measured and added together as the measured weight. Each of these electrochemical cells underwent initial charge and discharge, degassing of the generated gas, and then charge and discharge twice (three times of charge and discharge in total). The energy from the third discharge was divided by the measured weight calculated in advance to calculate energy density.

### Electrical Resistance Measurement

Each of these electrochemical cells was charged to 100% of the capacity after the third charge and discharge, and was left for one hour to measure the open circuit voltage (OCV). The electrical resistance of each cell was then calculated by calculating the difference between a voltage upon energizing the electrochemical cell with a current of 1C (a current rate at which a cell with a theoretical capacity is fully discharged in one hour) for 30 seconds and the OCV, and dividing the difference by the current value.

The measurement results are as follows: In example 1, the energy density was 208 Wh/kg, and the electrical resistance was 1.45 S2. In comparative example 1, the energy density was 187.5 Wh/kg, and the electrical resistance was 1.45 S2. In comparative example 2, the energy density was 244 Wh/kg, and the electrical resistance was 1.68 Q. In example 1, the energy density was higher than in comparative example 1 without the electrical resistance being increased. In comparative example 2, the energy density was higher than in comparative example 1 with an increased electrical resistance.

The present disclosure may be implemented in the following forms.

In one or more embodiments of the present disclosure, an electrochemical cell includes a first electrode including a first current collector and a first electrode active material layer, a second electrode including a second current collector and a second electrode active material layer, a separator between the first electrode and the second electrode, a casing accommodating the first electrode, the second electrode, and the separator, a first terminal electrically connected to the first current collector and extending outside from the casing, and a second terminal electrically connected to the second current collector and extending outside from the casing. The first electrode active material layer includes a first portion including a silicon layer on a surface of the first current collector and a first carbon material layer on a surface of the silicon layer, and a second portion including a second carbon material layer on the surface of the first current collector and continuous with the first carbon material layer.

In one or more embodiments of the present disclosure, the electrochemical cell can be smaller while increasing energy density and reducing an increase in electrical resistance.

Although an embodiment of the present disclosure have been described in detail, the present disclosure is not limited to the embodiment described above, and may be changed or varied in various manners without departing from the spirit and scope of the present disclosure. The components described in the above embodiment may be entirely or partially combined as appropriate unless any contradiction arises.

### REFERENCE SIGNS

10 negative electrode current collector
11 negative electrode active material layer
11a first portion
11b second portion
12 silicon layer
13 first carbon material layer
14 second carbon material layer
20 positive electrode current collector
21 positive electrode active material layer
100 electrochemical cell
102 electricity generator
102a negative electrode
102b positive electrode
102c separator
103 casing
104 terminal
104a negative electrode terminal
104b positive electrode terminal

## Claims

1. An electrochemical cell, comprising:
a first electrode including a first current collector and a first electrode active material layer;
a second electrode including a second current collector and a second electrode active material layer;
a separator between the first electrode and the second electrode;
a casing accommodating the first electrode, the second electrode, and the separator;
a first terminal electrically connected to the first current collector and extending outside from the casing; and
a second terminal electrically connected to the second current collector and extending outside from the casing,
wherein the first electrode active material layer includes
a first portion including a silicon layer on a surface of the first current collector and a first carbon material layer on a surface of the silicon layer, and
a second portion including a second carbon material layer on the surface of the first current collector and continuous with the first carbon material layer.

2. The electrochemical cell according to claim 1, wherein
the first electrode active material layer includes a plurality of the first portions in strips and a plurality of the second portions in strips, and the plurality of first portions and the plurality of second portions alternate with each other as viewed in plan.

3. The electrochemical cell according to claim 1, wherein
the first electrode active material layer includes the second portion surrounded by the first portion as viewed in plan.

4. The electrochemical cell according to claim 1, wherein
the first electrode active material layer includes the first portion surrounded by the second portion as viewed in plan.

5. The electrochemical cell according to any one of claims 1 to 4, wherein
the first carbon material layer and the second carbon material layer comprise an electrolyte and graphite particles.

6. The electrochemical cell according to any one of claims 1 to 5, wherein
the first carbon material layer and the second carbon material layer are substantially free of a binder material.

7. The electrochemical cell according to any one of claims 1 to 6, wherein
the first carbon material layer and the second carbon material layer are in contact with the separator.

8. The electrochemical cell according to any one of claims 1 to 7, wherein
the first electrode is a negative electrode.

9. The electrochemical cell according to any one of claims 1 to 8, wherein
the silicon layer is an amorphous silicon thin film.

10. The electrochemical cell according to any one of claims 1 to 9, wherein
at least one of the first electrode or the second electrode is semisolid and comprises 0 to 1.5 wt% of a binder.

11. The electrochemical cell according to any one of claims 1 to 9, wherein
the first electrode comprises 1.5 to 5 wt% of a binder.

12. The electrochemical cell according to claim 11, wherein
the second electrode comprises 0 to 1.5 wt% of a binder.

13. An electrochemical cell, comprising:
a first electrode including a first current collector and a first electrode active material layer;
a second electrode including a second current collector and a second electrode active material layer;
a separator between the first electrode and the second electrode;
a casing accommodating the first electrode, the second electrode, and the separator;
a first terminal electrically connected to the first current collector and extending outside from the casing; and
a second terminal electrically connected to the second current collector and extending outside from the casing,
wherein the first electrode active material layer includes a silicon material and a carbon material layer on a surface of the first current collector, and
the first electrode active material layer comprises 40 to 100 wt% of the silicon material.

14. The electrochemical cell according to claim 13, wherein
the second electrode is semisolid and comprises 0 to 1.5 wt% of a binder.

15. The electrochemical cell according to claim 13, wherein
the second electrode comprises 1.5 to 5 wt% of a binder and is not bound to the second current collector with the binder.
